# EUROPÄISCHE PATENTANMELDUNG

(11) **EP 4 195 686 A1**
(43) Veröffentlichungstag der Anmeldung: **14.06.2023**
(21) Anmeldenummer: 21214083.4
(22) Anmeldetag: 13.12.2021
(51) Int. Cl.: H04Q 9/00, H04W 52/02, H04W 52/14, H04W 52/24

(54) **DATEN-ÜBERTRAGUNGSVERFAHREN**

(71) Anmelder: Landis+Gyr GmbH, 90459 Nürnberg (DE)
(72) Erfinder: Bär, Siegfried, 90425 Nürnberg (DE)
(74) Vertreter: Marks & Clerk LLP

(57) **Zusammenfassung**

Ein Verfahren zum Übertragen von Daten, insbesondere von Messdaten, umfasst die Schritte Teilen der zu übertragenden Daten in unterschiedliche Prioritäten und Übertragen der priorisierten Daten in Abhängigkeit eines bei einer aufgrund einer Übertragungsqualität möglichen Datenrate vorliegenden Spreizfaktors zur Reduzierung eines Übertragungs-Energieverbrauchs.

## Beschreibung

Die Erfindung betrifft ein Verfahren zum Übertragen von Daten, insbesondere von Messdaten. Ferner richtet sich die Erfindung auf ein Messgerät, wie einen thermischen Energiezähler, der das Verfahren nutzt.

Es ist bekannt, dass in einem Niedrigenergie-Weitverkehr-Netzwerk (low power wide area network) Niedrigenergie-Geräte, wie Messgeräte, zumindest zeitweise mit einem Server in Verbindung stehen, wobei ein Protokoll so ausgelegt ist, dass eine große Reichweite und ein niedriger Energieverbrauch der Niedrigenergie-Geräte bei niedrigen Betriebskosten und längerer Lebensdauer bei batteriebetriebenen Geräten erreichbar sind.

Das LoRa-Übertragungsverfahren (long range bzw. low radiation) erlaubt zum Beispiel eine Kompensation schlechter Datenverbindungen zwischen Gateways und Niedrigenergie-Geräten. Dafür werden (LoRa-)Spreizfaktoren herangezogen, die bestimmen, wie viele Symbole zur Codierung von (Nutz)Daten verwendet werden.

Im Allgemeinen gilt, dass die Übertragungsdauer der Daten von dem Niedrigenergie-Gerät zu dem Gateway verlängert wird und die Reichweite vergrößerbar ist, wenn der Spreizfaktor erhöht wird. Bei höheren Spreizfaktoren verbrauchen die Niedrigenergie-Geräte einen identischen Sendestrom, um eine gleiche Datenmenge zu übertragen. Jedoch ergibt sich insgesamt ein höherer Energieverbrauch, da die Übertragungsdauer größer wird und damit länger der Sendestrom fließt. Durch das verlängerte Übertragungsintervall wird der höhere durchschnittliche Übertragungsstromverbrauch pro Zeit wieder reduziert. Die Verlängerung des Übertragungsintervalls ist eine Gegenmaßnahme zum Reduzieren des durchschnittlichen Sendestroms.

Nachteilig dabei ist, dass die Daten weniger häufig ausgesendet werden und entsprechend zur Verfügung stehen. Die Lebensdauer bzw. Einsatzdauer eines entsprechenden Niedrigenergie-Geräts wird also verkürzt, wenn ein höherer Spreizfaktor verwendet wird, was oftmals nachteilig ist.

Der Erfindung liegt daher die Aufgabe zugrunde, ein Verfahren zum Übertragen von Daten bereitzustellen, das besonders energiesparend, wie stromsparend, und äußerst störungsunanfällig ist. Ein entsprechendes Messgerät soll außerdem geliefert werden.

Diese Aufgabe wird erfindungsgemäß durch die in den Hauptansprüchen 1 und 16 angegebenen Merkmale gelöst. Der Kern der Erfindung liegt in einer Priorisierung der zu übertragenden Daten in Abhängigkeit eines vorliegenden Spreizfaktors. Es wird insbesondere eine Auswahlentscheidung getroffen, welche Wichtigkeit, Relevanz oder dergleichen die zu übertragenden Daten bzw. Teilmengen derselben haben. Beispielsweise werden die Prioritäten nacheinander festgelegt. Abhängig von dem Charakter der zu übertragenden Daten werden diese in unterschiedliche Prioritäten unterteilt. Die Daten werden so in eine gewisse Reihenfolge gesetzt.

Insbesondere werden bei allen Spreizfaktoren alle gewünschten bzw. zu übertragenden Daten übertragen. Eine erwartete Lebensdauer bzw. Einsatzdauer des Messgeräts ist so auch bei schlechten Bedingungen bzw. bei auftretenden Übertragungsstörungen erreichbar. Der Spreizfaktor ändert sich, wodurch sich auch die effektive Datenrate ändert.

Der Spreizfaktor ist insbesondere definiert als eine Chiprate durch eine Symbolrate. Die Chiprate ist eine interne Arbeitsgeschwindigkeit bzw.

Übertragungsrate/Datenrate, insbesondere nach dem Spreizen. Durch höhere Spreizfaktoren wird auch ein Spreizgewinn erhöht, damit sich das Signal besser von einem Hintergrundrauschen (SNR) abhebt. Die Chiprate ist bevorzugt immer gleich. Günstigerweise erfolgt eine Verdopplung des Verhältnisses zwischen Chiprate und Symbolrate mit jeder Erhöhung auf den nächsten Spreizfaktor. Der Spreizgewinn wird mit größerem Spreizfaktor auch größer. Je höher eine Datenrate ist, desto höher ist eine Bitrate. Bei gleicher Informationslänge wird also die Zeitdauer der Übertragung mit höherer Datenrate kürzer. Bei Erhöhung der Datenrate steigt gleichzeitig auch die Empfindlichkeit gegenüber Störungen, Verzerrung oder dergleichen.

Die Auswahl der Datenrate erfolgt beispielsweise durch ein Gateway mittels Rückmeldung an das Messgerät. Alternativ hat das Messgerät mindestens einen eigenen Algorithmus zur Anpassung an eine Qualität der Datenübertragung implementiert. Bevorzugt erfolgt die Auswahl der Datenrate durch einen Netzwerk-Server, der günstigerweise diese Auswahl mindestens einem Gateway mitteilt, das wiederum vorzugsweise diese Information an mindestens ein Messgerät weiterleitet.

Die Reichweite bzw. Qualität der Datenübertragung ist beispielsweise stark vom Umfeld, Hindernissen, wie Wänden, bzw. Antennen/Funkmodulen abhängig. Die Übertragung erfolgt bevorzugt intervallweise. Bevorzugt erfahren die Daten vor der Übertragung die Spreizung. Es erfolgt insbesondere eine Zeitspreizung. Durch die Zeitspreizung wird ein Energieverbrauch über einen längeren Zeitraum verteilt, was die Übertragung gegen kurzzeitige Störungen robuster macht. Eine höchste Flexibilität von Zugriffen ist außerdem gewährleistet.

Das Verfahren ist imstande, unter veränderlichen Umgebungseinflüssen zu arbeiten. Es ist auch imstande, mit asymmetrischen Datenraten zu arbeiten. Eine Datenübertragung wird zur Verfügung gestellt, deren Kenngrößen individuell abstimmbar sind. Unterschiedliche Umweltbedingungen sind berücksichtigbar. Rauschsignale und andere Störsignale sind unterdrückbar. Das System kann entsprechend reagieren.

Die Datenübertragung erfolgt bevorzugt drahtlos, insbesondere mittels Funktechnologie. Die mindestens eine Datenübertragungseinheit arbeitet entsprechend günstigerweise mit Funktechnologie. Die zu übermittelnde Daten werden bevorzugt in elektromagnetische Wellen umwandelt. Es kommt günstigerweise eine Modulationstechnik zum Einsatz. Ein verwendetes Protokoll ist vorzugsweise vollständig bidirektional. Es findet beispielsweise eine Prüfung statt, ob die Datenübertragung mit den ermittelten bzw. übergebenen Parametern möglich ist.

Die zu übertragenden Daten stehen insbesondere mit dem Messgerät und/oder einer Messung in Zusammenhang. Sie sind beispielsweise Messdaten, Nutzdaten, Messgerätedaten oder dergleichen.

Bevorzugt wird eine LoRa-Übertragung genutzt. Das LoRa-Netzwerkprotokoll ist insbesondere für lange Reichweiten bei geringem Energieverbrauch ausgelegt. Günstigerweise ist eine End-to-End-Verschlüsselung gegeben.

Das Messgerät ist beispielsweise als Wärmezähler oder Kältezähler ausgeführt.

Die mindestens eine Speichereinheit für elektrische Energie ist beispielsweise als Batterie oder Akkumulator ausgeführt.

Weitere vorteilhafte Ausgestaltungen der Erfindung sind in den Unteransprüchen angegeben.

Das Verfahren gemäß dem Unteranspruch 2 ist besonders effizient. Die definierte Datenmenge entspricht beispielsweise einer Anzahl an zur Verfügung stehender Bytes.

Das Verfahren gemäß dem Unteranspruch 3 hat einen äußerst geringen Energiebedarf. Das Übertragungsintervall ist insbesondere ein Sendeintervall. Insbesondere handelt es sich bei dem Übertragungsintervall um eine entsprechende Übertragungsdauer bzw. Zeitdauer.

Das Verfahren gemäß dem Unteranspruch 4 hat wieder einen besonders geringen Energieverbrauch. Die Übertragungsleistung ist bevorzugt eine Sendeleistung. Günstigerweise wird die Übertragungsleistung für die Definition des Übertragungsintervalls berücksichtigt. Bei Beachtung der Randbedingungen wird bevorzugt die notwendige Übertragungsleistung berechnet. Es erfolgt bevorzugt, insbesondere stets, eine Übertragung mit voller Sendeleistung.

Das Verfahren gemäß dem Unteranspruch 5 ist äußerst benutzerfreundlich. Die zu übertragenden Daten mit der höchsten Priorität sind bevorzugt besonders wichtige bzw. relevante Daten, beispielsweise die wichtigsten bzw. relevantesten Daten, wie Energie, Volumen, Gerätenummer, Gerätezeit und/oder Fehlerflags/Fehlerindikator.

Das Verfahren gemäß dem Unteranspruch 6 ist besonders benutzerfreundlich. Das Übertragungsintervall ist beispielsweise von einem Benutzer oder Server voreinstellbar.

Gemäß dem Unteranspruch 7 ist das Übertragungsintervall bei der Übertragung von Daten mit einer niedrigeren Priorität vergrößert bzw. verlängert, was zu einem höheren elektrischen Energiebedarf führt. Pro Zeit(einheit) ist der durchschnittliche Energiebedarf jedoch reduziert. Daten mit einer niedrigeren Priorität sind zum Beispiel (Durch)fluss, Leistung, Temperatur Vorlauf und/oder Temperatur Rücklauf.

Das Verfahren gemäß dem Unteranspruch 8 ist äußerst effizient.

Das Verfahren gemäß dem Unteranspruch 9 ist besonders effizient. Jede Datenübertragung hat nur einen äußerst geringen Energiebedarf.

Bei dem Verfahren gemäß dem Unteranspruch 10 werden die Daten in äußerst vorteilhafter Weise übertragen. Bei der niedrigsten Datenrate bleibt demnach eine Übertragung von Daten aus, die eine im Vergleich mit der höchsten Priorität niedrigere Priorität haben.

Bei einem Verfahren gemäß dem Unteranspruch 11 werden Daten unterschiedlicher Prioritäten übertragen. Bei der zweitniedrigsten Datenrate oder höher, ist eine Übertragungsqualität besser als bei der niedrigsten Datenrate.

Bei dem Verfahren gemäß dem Unteranspruch 12 können beispielsweise auch Daten einer bestimmten Priorität ausgelassen werden.

Das Verfahren gemäß dem Unteranspruch 13 erlaubt auch eine Übertragung von Daten unterschiedlicher Prioritäten.

Die Übertragungsleistung gemäß dem Unteranspruch 15 wird bevorzugt von einem Netzwerk-Server angefordert, der vorzugsweise die Kontrolle in einem Netzwerk übernimmt. Der Netzwerk-Server schätzt günstigerweise ab, wie gut Daten empfangen werden und übermittelt beispielsweise für das Messgerät optimale Sendeparameter, so dass die Daten immer noch zuverlässig empfangen werden können, gleichzeitig aber der Verbrauch des Messgeräts verringert wird. Der Netzwerk-Server führt die Schätzung beispielsweise mit von einem Gateway gemessenen physikalischen Parameter, wie Empfangsstärke, SNR(signal-to-noise-ratio; Signal-Rausch-Verhältnis), aus. Die optimalen Sendeparameter sind beispielsweise von einer Datenrate, Verringerung einer Sendeleistung und/oder Kanalliste abhängig.

Nachfolgend werden unter Bezugnahme auf die beigefügte Zeichnung mehrere bevorzugte Ausführungsformen der Erfindung beispielhaft beschrieben. Dabei zeigen:
- Fig. 1: eine Netzwerkarchitektur mit Messgeräten, die ein erfindungsgemäßes Verfahren nutzen, und
- Fig. 2: eine Datenübertragung mit unterschiedlichen Intervallen

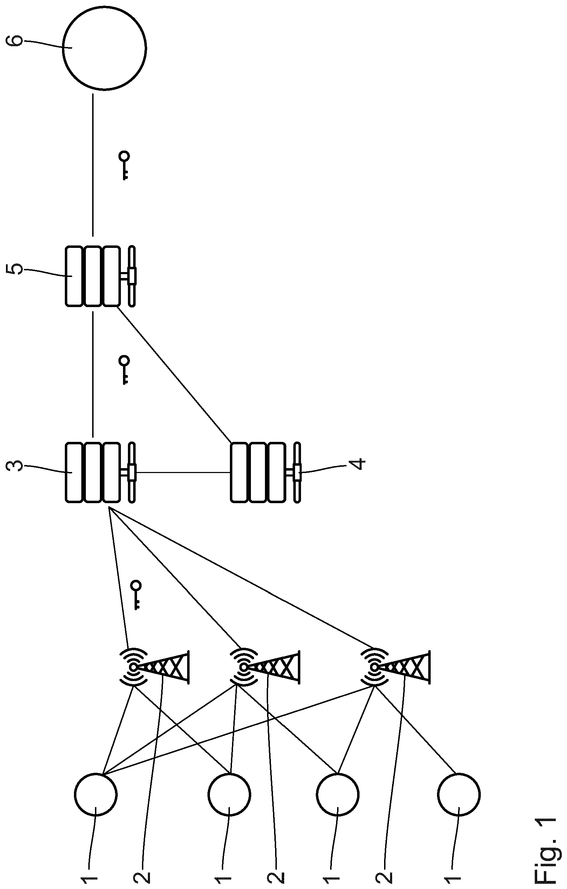

Zunächst bezugnehmend auf Fig. 1, umfasst eine dort in ihrer Gesamtheit dargestellte, insbesondere sternförmige, Netzwerkarchitektur eine Vielzahl von Endgeräten 1, die hier als LoRa-Endgeräte bzw. LoRa-Messgeräte ausgeführt sind. Jedes LoRa-Endgerät 1 hat eine Messfunktion und ist bevorzugt auch imstande, eine Rechenleistung durchzuführen. Ferner weist es ein Funkmodul zur Umsetzung der Daten, insbesondere Messdaten, in ein Funksignal auf. Das Netzwerk ist beispielsweise regional, national oder global.

Die LoRa-Endgeräte 1 stehen mit LoRa-Gateways 2 zumindest zeitweise in Funkverbindung und sind imstande, mit diesen entsprechend zu kommunizieren. Die LoRa-Endgeräte 1 können Daten an die LoRa-Gateways 2 übermitteln und günstigerweise auch empfangen. Jedes LoRa-Gateway 2 ist bevorzugt ein Hardware-Gerät, das alle LoRa-Daten/Nachrichten von den LoRa-Endgeräten 1 empfängt. Diese Nachrichten werden dann bevorzugt in ein Array von Bytes umgewandelt.

Die LoRa-Gateways 2 sind imstande, Daten, insbesondere Datenpakete, an einen LoRa-Netzwerk-Server 3, zu senden, der eine Kontrolle in der Netzwerkarchitektur übernimmt. Im Vergleich mit dem LoRa-Netzwerk-Server 3 haben die LoRa-Gateways 2 nur eine eingeschränkte Rechenleistung.

Der LoRa-Netzwerk-Server 3 wiederum ist imstande, mit einem Verbindungsserver 4 zu kommunizieren, der beispielsweise Verbindungsanfragen von dem LoRa-Netzwerk-Server 3 empfängt.

Der LoRa-Netzwerk-Server 3 und der Verbindungsserver 4 sind imstande, mit einem Anwendungsserver 5 zu kommunizieren, auf dem Anwendungsprogramme installiert sind bzw. der imstande ist, Anwendungsprogramme auszuführen.

Der LoRa-Netzwerk-Server 3 ist beispielsweise imstande, Nachrichten/Daten an eine richtige Anwendung weiterzuleiten, das beste LoRa-Gateway 2 für Nachrichten/Daten, insbesondere Downlink-Nachrichten/Daten, auszuwählen, doppelte Nachrichten/Daten zu entfernen, wenn diese von mehreren LoRa-Gateways 2 empfangen wurden, Nachrichten/Daten zu entschlüsseln, die von LoRa-Endgeräten 1 versandt werden und/oder Nachrichten/Daten zu verschlüsseln, die an die LoRa-Endgeräte 1 zurückgeschickt werden. Eine Auswahl des besten LoRa-Gateways 2 wird in der Regel auf Grundlage einer Link-Qualitätsanzeige getroffen. Es ist zweckmäßig, wenn eine Schnittstelle mit dem Anwendungsserver 5 von dem LoRa-Netzwerk-Server 3 gesteuert wird.

Der Anwendungsserver 5 ist imstande, mit einem Dashboard 6 zu kommunizieren, das imstande ist, Daten der LoRa-Endgeräte 1 zu visualisieren bzw. auszuwerten. Die Daten der LoRa-Endgeräte 1 laufen in dem Dashboard 6 zusammen.

Das Netzwerk ist imstande, die Geschwindigkeit, mit der die LoRa-Endgeräte 1 ihre Daten übermitteln, automatisch zu optimieren. Eine adaptive Datenrate ist realisierbar. Die LoRa-Endgeräte 1 sind beispielsweise imstande, unterschiedliche Informationen/Daten zu übertragen. Für die Übertragung werden die Daten unterschiedlichen Prioritäten unterteilt.

Nachfolgend ist eine Tabelle dargestellt, in welcher unterschiedliche Daten der LoRa-Endgeräte 1 beispielhaft mit entsprechender Priorität und Größe enthalten sind:

| Position | Wert | Bytes | Priorität |
|---|---|---|---|
| 1 | Energie | 6 | 1 |
| 2 | Volumen | 6 | 1 |
| 3 | Zählernummer | 6 | 1 |
| 4 | Zählerzeit | 6 | 1 |
| 5 | Fehlerflags | 6 | 1 |
| 6 | Durchfluss | 4 | 2 |
| 7 | Leistung | 4 | 2 |
| 8 | T emperaturvorlauf | 4 | 2 |
| 9 | Temperaturrücklauf | 4 | 2 |

Die höchste Priorität ist Priorität 1, die zweithöchste Priorität ist Priorität 2.

Die Priorität 2 ist im Vergleich mit der Priorität 1 niedriger. Analoges gilt, wenn eine Unterteilung der zu übertragenden Daten in mehr als zwei Prioritäten erfolgt.

Es erfolgt gemäß einer ersten Ausführungsform eine Datenübertragung eines LoRa-Endgeräts 1 über LoRa derart, dass dessen Lebensdauer bei Übertragung aller "Priorität 1"-Daten mit einem festen Sendeintervall T1 bei einer Datenrate DRO eingehalten wird. Solange nur die Datenrate DRO verwendet werden kann, werden nur die "Priorität 1"-Daten von dem LoRA-Endgerät 1 übertragen. Eine Übertragung von Daten mit niedrigerer Priorität, hier der "Priorität 2"-Daten, bleibt somit aus.

Wenn die Qualität der Datenübertragung bzw. Funkverbindung besser ist, das heißt anstelle der Datenrate DRO die Datenrate DR1 oder höher verwendet wird, werden in der gleichen Datenaussendung sowohl die "Priorität 1"-Daten als auch "Priorität 2"-Daten mit dem festen Sendeintervall T1 ausgesendet. Der Umfang der "Priorität 2"-Daten ist hier so gewählt, dass sich bei einem Übergang von der Datenrate DRO auf die Datenrate DR1 der Umfang der (Nutz)daten nicht mehr als verdoppelt. Bei der Datenrate DR1 können in der gleichen Zeit wie bei der Datenrate DRO in etwa doppelt so viele Daten übertragen werden.

Nachfolgend wird eine zweite Ausführungsform beschrieben. Auf die vorherigen Ausführungen wird verwiesen. Gemäß der zweiten Ausführungsform sind die zu übertragenden Daten in drei unterschiedliche Prioritäten unterteilt. Auch hier ist die Anzahl der Bytes bei den "Priorität 1"-Daten und den "Priorität 2"-Daten sowie den "Priorität 3"-Daten nicht größer als das Doppelte der Bytes bei den "Priorität 1"-Daten und "Priorität 2"-Daten bzw. nicht größer als das Vierfache der "Priorität 1"-Daten. Bei der Datenrate DRO werden die "Priorität 1"-Daten ausgesendet. Bei der Datenrate DR1 werden die "Priorität 1"-Daten und "Priorität 2"-Daten ausgesendet. Bei der Datenrate DR2 oder besser werden die "Priorität 1"-Daten und "Priorität 2"-Daten sowie die "Priorität 3"-Daten mit dem festen Sendeintervall T1 ausgesendet.

Nachfolgend wird eine dritte Ausführungsform beschrieben. Auf die vorherigen Ausführungen wird verwiesen. Dabei handelt es sich im Wesentlichen um eine Verallgemeinerung der ersten und zweiten Ausführungsform. Die zu übertragenden Daten werden in bis zu sechs unterschiedliche Prioritäten unterteilt. Dabei wird die Regel eingehalten, nach welcher pro Prioritätsstufe nicht mehr Bytes hinzukommen, wie die Summe der Bytes aller niedrigeren Prioritätsstufen zusammen und/oder die Sendedauer nicht größer als bei sämtlichen "Priorität 1"-Daten wird. Das Aussenden erfolgt wieder mit dem festen Sendeintervall T1 und die Auswahl der Daten mittels der Prioritäten wird durch die Datenrate bestimmt. Beispielsweise werden bei der Datenrate DR4 alle Daten der Prioritäten 1 bis 5 ausgesendet. Dabei können auch Prioritätsstufen ausgelassen werden.

Nachfolgend wird eine vierte Ausführungsform beschrieben. Auf die vorherigen Ausführungen wird verwiesen. Gemäß der vierten Ausführungsform ist die Datenübertragung derart ausgelegt, dass die Lebensdauer des LoRa-Endgeräts 1 bei Übertragung einer Anzahl (Nutz)bytes N mit einem festen Sendeintervall T1 bei der Datenrate DRO eingehalten wird. Dabei ist die Anzahl der (Nutz)bytes N größer als die Anzahl P der "Priorität 1"-Datenbytes, wobei N so gewählt wird, dass (N - P) ≥ einem größten Datum aus den anderen Prioritäten ist.

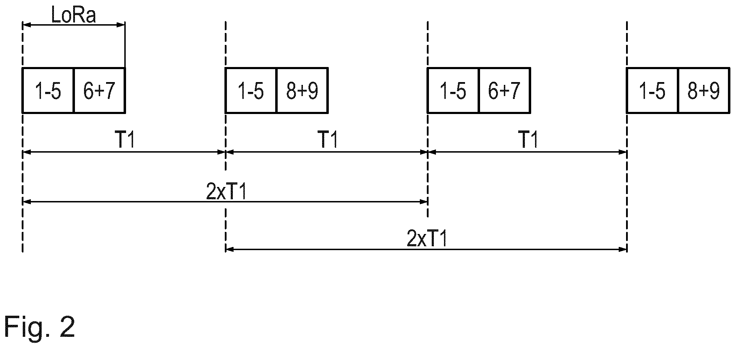

Beispielsweise gilt: N = 38. Die Datendefinition ist bevorzugt der obigen Tabelle. Pro Übertragung mit dem festen Sendeintervall T1 bei der Datenrate DRO können damit alle "Priorität 1"-Daten und jeweils zwei Daten alternierend aus der Priorität 2 übertragen werden. Dies ist in Fig. 2 veranschaulicht. Daten gemäß Positionen 1 bis 5 werden mit dem Sendeintervall T1 übertragen, während Daten gemäß Positionen 6 + 7 bzw. Positionen 8 + 9 mit jeweils dem doppelten Sendeintervall 2 x T1, gegenseitig um das Sendeintervall T1 versetzt, übertragen werden.

Nachfolgend wird eine fünfte Ausführungsform beschrieben. Auf die vorherigen Ausführungen wird verwiesen. Bei diesem handelt es sich im Wesentlichen um eine Verallgemeinerung der vierten Ausführungsform. Eine Dimensionierung der übertragbaren (Nutz)bytes N0 bis N4 erfolgt allgemein pro Datenrate DRO bis DR4. Es bleiben immer genug Bytes frei, damit aus nachfolgenden Prioritäten weitere Datenbytes eingefügt werden können. Beispielsweise werden bei der Datenrate DRO die "Priorität 1"-Daten mit dem Sendeintervall T1 übertragen, während die "Priorität 2"-Daten beispielsweise alternierend mit dem doppelten Sendeintervall 2 x T1 und zum Beispiel die "Priorität 3"-Daten alternierend mit dem vierfachen Sendeintervall 4 x T1 übertragen werden. Dieses Verfahren kann auch auf die anderen Datenraten DR1 bis DR4 angewendet werden.

Nachfolgend wird eine sechste Ausführungsform beschrieben. Auf die vorherigen Ausführungen wird verwiesen. Es liegt wieder die Einteilung der Daten gemäß der obigen Tabelle vor. Die Datenrate DRO wird zur Funkübertragung verwendet. Das LoRa-Endgerät 1 wertet die von dem Gateway 2 geforderte Sendeleistung aus. Es gibt einen Zusammenhang zwischen der Sendeleistung des LoRa-Endgeräts 1 und dem Verbrauch der Batteriekapazität des LoRa-Endgeräts 1. Bei einer niedrigen Sendeleistung wird naturgemäß weniger Batteriekapazität benötigt, so dass bei der Datenrate DRO auch "Priorität 2"-Daten mit dem Sendeintervall T1 gesendet werden können.

Nachfolgend wird eine siebte Ausführungsform beschrieben. Auf die vorherigen Ausführungen wird verwiesen. Dieses ist im Allgemeinen die Verallgemeinerung der sechsten Ausführungsform auf eine beliebige Anzahl an Prioritäten der Daten.

Nachfolgend wird eine achte Ausführungsform beschrieben. Auf die vorherigen Ausführungsformen wird verwiesen. Dieses ist eine Kombination der Ausführungsformen 1 bis 5 und 6, 7. Das Sendeintervall T1 wird pro Priorität vergrößert. Außerdem wird die Datenauswahl aus den Prioritäten über die geforderte Sendeleistung gesteuert.

## Patentansprüche

1. Verfahren zum Übertragen von Daten, insbesondere von Messdaten, umfassend die Schritte
- Teilen der zu übertragenden Daten in unterschiedliche Prioritäten, und
- Übertragen der priorisierten Daten in Abhängigkeit eines bei einer aufgrund einer Übertragungsqualität möglichen Datenrate vorliegenden Spreizfaktors zur Reduzierung eines Übertragungs-Energieverbrauchs.

2. Verfahren nach Anspruch 1, **dadurch gekennzeichnet, dass** für jede der Prioritäten für eine Datenübertragung in Abhängigkeit des Spreizfaktors eine Datenmenge zum Erreichen einer erwarteten Lebensdauer definiert wird.

3. Verfahren nach Anspruch 1 oder 2, **dadurch gekennzeichnet, dass** für jede der Prioritäten für eine Datenübertragung ein Übertragungsintervall (T1) zum Erreichen einer erwarteten Lebensdauer definiert wird.

4. Verfahren nach Anspruch 3, **dadurch gekennzeichnet, dass** eine Übertragungsleistung, insbesondere Sendeleistung, für die Definition des Übertragungsintervalls (T1) pro Priorität einbezogen wird.

5. Verfahren nach einem der vorherigen Ansprüche, **dadurch gekennzeichnet, dass** die zu übertragenden Daten mit der höchsten Priorität bei jedem Spreizfaktor in vollem Umfang übertragen werden.

6. Verfahren nach einem der vorherigen Ansprüche, **dadurch gekennzeichnet, dass** die zu übertragenden Daten mit der höchsten Priorität bei jedem Spreizfaktor mit einem voreingestellten Übertragungsintervall (T1) übertragen werden.

7. Verfahren nach einem der vorherigen Ansprüche, **dadurch gekennzeichnet, dass** die zu übertragenden Daten mit einer im Vergleich mit der höchsten Priorität niedrigeren Priorität mit einem im Vergleich mit einem voreingestellten vergrößerten Übertragungsintervall übertragen werden.

8. Verfahren nach einem der vorherigen Ansprüche, **dadurch gekennzeichnet, dass** bei all den Spreizfaktoren alle der zu übertragenden Daten übertragen werden, wobei ein Übertragungsintervall (T1) gemäß der Priorität der zu übertragenden Daten ausgewählt wird.

9. Verfahren nach einem der vorherigen Ansprüchen, **dadurch gekennzeichnet, dass** das Teilen der Daten bei jeder Datenübertragung erfolgt.

10. Verfahren nach einem der vorherigen Ansprüche, **dadurch gekennzeichnet, dass** nur Daten der höchsten Priorität, insbesondere mit einem festen Übertragungsintervall (T1), übertragen werden, wenn nur die niedrigste Datenrate (DR0) verwendbar ist.

11. Verfahren nach einem der vorherigen Ansprüche, **dadurch gekennzeichnet, dass** Daten der höchsten Priorität und niedriger, insbesondere mit einem festen Übertagungsintervall (T1), übertragen werden, wenn die zweitniedrigste Datenrate (DR1) oder höher verwendbar ist.

12. Verfahren nach einem der vorherigen Ansprüche, **dadurch gekennzeichnet, dass** für jede Priorität die Datenmenge maximal in einem Umfang entsprechend einer Summe aller niedrigeren Prioritäten zusammen vergrößert wird, wobei vorzugsweise für jede Priorität ein Übertragungsintervall (T1) maximal so groß wird wie ein Übertragungsintervall (T1) der höchsten Priorität.

13. Verfahren nach einem der vorherigen Ansprüche, **dadurch gekennzeichnet, dass** bei jeder Übertragung mit einem festen Übertragungsintervall (T1) bei der niedrigsten Datenrate (DR0) alle Daten der höchsten Priorität und Daten einer niedrigeren Priorität alternierend übertragen werden.

14. Verfahren nach einem der vorherigen Ansprüche, **dadurch gekennzeichnet, dass** eine Dimensionierung der übertragbaren Datenmenge für jede Datenrate erfolgt, wobei eine Teil-Datenmenge für die Übertragung mindestens einer niedrigeren Priorität frei bleibt.

15. Verfahren nach einem der vorherigen Ansprüche, **dadurch gekennzeichnet, dass** eine geforderte Übertragungsleistung ausgewertet wird.

16. Messgerät, wie thermischer Energiezähler,
a) mit mindestens einer Speichereinheit für elektrische Energie, und
b) mit mindestens einer Datenübertragungseinheit,
i) wobei die mindestens eine Speichereinheit mit der mindestens einen Datenübertragungseinheit zumindest zeitweise in elektrisch leitender Verbindung zur Versorgung derselben mit elektrischer Energie steht, und
ii) die das Verfahren gemäß einem der vorherigen Ansprüche nutzt.
